# EUROPEAN PATENT APPLICATION

(11) **EP 4 614 052 A1**
(43) Date of publication of application: **10.09.2025**
(21) Application number: 24162369.3
(22) Date of filing: 08.03.2024
(51) Int. Cl.: F16L 55/163, F16L 55/165, F16L 55/168

(54) **LIQUID-CONDUCTING SYSTEMS AND METHODS FOR REPAIR OR RENOVATION OF LIQUID-CONDUCTING SYSTEMS**

(71) Applicant: Illigo AB, 262 60 Ängelholm (SE)
(72) Inventor: Wennström, Niklas, 262 60 Ängelholm (SE)
(74) Representative: AWA Sweden AB

(57) **Abstract**

A method of renovating a liquid-conducting system (2, 3) comprises providing a liner (41, 42), applying the liner (41, 42) to at least a wall portion (20, 31, 32, 33) of the liquid-conducting system, and causing the liner (41, 42) to conform to a wall portion shape. The method further comprises applying an adhesive sealing sheet (100, 100', 100", 110, 110', 110") to at least a portion of the wall portion (20, 31, 32, 33) of the liquid-conducting system, such that a first adhesive surface (51) of the adhesive sealing sheet (100, 100', 100", 110, 110', 110") causes the adhesive sealing sheet to adhere to the wall portion (20, 31, 32, 33). The adhesive sealing sheet (100, 100', 100", 110, 110', 110") is arranged between the wall portion (20, 31, 32, 33) and the liner (41, 42).

## Description

### Technical field

The present disclosure relates to methods for repair and/or renovation of liquid-conducting systems, including non-pressurized liquid-conducting systems, such as drain systems, including e.g. drain pipes and floor drains.

The methods may also be used for repair and/or renovation of pressurized liquid-conducting systems, such as water pipes, including mains water lines, pipes and hoses.

The disclosure finds particular use for repair and/or renovation of liquid-conducting systems made of polymeric material, such as thermoplastic materials, e.g. polyolefin or PVC.

The disclosure can also be used for repair and/or renovation of liquid-conducting systems made from other materials, such as metal or concrete.

### Background

Methods of renovation and repair of liquid-conducting systems, such as drain pipes, by means of relining are well known. It is known to apply relining for renovating entire drain pipes end-to-end and for repairing cracks or holes in drain pipe walls locally.

Relining a drain pipe involves creating a new, seamless pipe within the existing damaged pipe, essentially rehabilitating it without the need for extensive excavation. This process is commonly used to repair pipes that have deteriorated, cracked, or are otherwise compromised. The process of relining a drain pipe generally comprises the following steps.

The first step is to inspect the drain pipe to determine the extent of damage and identify any blockages or obstructions. This is often done using specialized cameras inserted into the pipe.

Before relining can occur, the drain pipe must be thoroughly cleaned to remove any debris, corrosion, or buildup. High-pressure water jetting or mechanical grinding and/or cleaning equipment may be used for this purpose.

The relining material, typically a flexible resin-soaked web, is measured and customized to fit the specific dimensions of the drain pipe. The web is typically made of materials such as epoxy, fiberglass, or polyester.

The customized liner is then inserted into the drain pipe using specialized equipment such as inversion drums or winch systems. As the liner is inserted, it may be inverted or pulled into place, conforming to the shape of the existing pipe.

Once the liner is in place, it is inflated and/or heated to conform tightly to the interior walls of the existing pipe. This process ensures a tight seal and creates a new, smooth surface within the pipe. The curing process may take several hours, depending on the type of liner, curing method used and surrounding temperature.

Once the relining is complete and the new pipe has been inspected and approved, any connections to the drain system are reestablished, and the affected area is restored to its original condition. This may involve backfilling excavated areas or repairing any surface damage.

A problem in connection with use of relining methods is that the curing of the resin, and/or subsequent variations in temperature, may lead to some shrinkage of the liner thus formed. This may be less of a problem in cases where the lining properly extends from end to end of the drain pipe, but if it does not, then there may be leakage.

Consequently, it is of importance that the liner is accurately measured and customized for the liner to fit the dimensions of the existing pipe. It is also of importance to ensure proper inflation and/or heating of the liner during the curing process to ensure it conforms tightly to the inner walls of the pipe. Finally, it is of importance to monitoring and control the curing conditions, such as temperature and pressure, to prevent premature shrinkage.

However, there remains a need for improvements in the methods of renovation and repair of liquid-conducting systems in order to ensure effective and cost efficient renovation and/or repair.

### Summary

It is an objective of the present disclosure to provide methods which eliminate, or at least alleviate, the problems associated with prior art methods for renovation and repair of liquid-conducting systems. In particular, it is an objective to provide methods which reduce the risk of leakage from the renovated liquid-conducting system.

The invention is defined by the appended independent claims. Embodiments are set forth in the dependent claims, in the following description and in the attached drawings.

According to a first aspect, there is provided a method of renovating a liquid-conducting system, comprising providing a liner, applying the liner to at least a wall portion of the liquid-conducting system, and causing the liner to conform to a wall portion shape. The method further comprises applying an adhesive sealing sheet to at least a portion of the wall portion of the liquid-conducting system, such that a first adhesive surface of the adhesive sealing sheet causes the adhesive sealing sheet to adhere to the wall portion, whereby the adhesive sealing sheet is arranged between the wall portion and the liner.

A liquid-conducting system may be a non-pressurized liquid-conducting system, such as a drain system, which may comprise components such as drain pipes, connectors and/or floor drains, etc..

Alternatively, the liquid-conducting system may be a pressurized liquid-conducting system, such as a water line, which may form part of a water mains system, an irrigation system, a pool or pond filtration system or any other type of system through which pressurized water or other liquid is conducted.

A liner is a material that may be applied to an inside wall of the liquid-conducting system to form a "pipe in the pipe" and may be used to restore the pipe system by sealing leaks and/or by reestablishing a smooth surface that does not impede transportation of sewage.

However, a liner, as well as the adhesive sealing sheet, may also be applied to an outside of the wall portion.

Hence, the method may be used for renovating a liquid-conducting system from the inside thereof or from the outside thereof.

By applying an adhesive sealing sheet between the wall portion and the liner, the risk of leakage is reduced. Moreover, depending on the properties of the sealing sheet, it is possible to provide enhanced adhesion between the wall portion and the liner.

The adhesive sealing sheet may be a double-sided adhesive sealing sheet comprising a second adhesive surface on a second surface opposite the first adhesive surface, said second adhesive surface causing the adhesive sealing sheet to adhere to the liner.

By providing a double-sided adhesive sheet, adhesion against the liner can be further improved. Good adhesion against the liner may also counteract shrinkage of the liner and reduce the risk of the liner collapsing in an event of loss of pressure in the inflated bladder.

The adhesive sealing sheet may comprise a substrate layer, which is expanded, in particular foamed, and preferably has a thickness of about 0.5-15 mm, preferably about 0.5-1 mm, about 1-1.5 mm, about 1.5-2 mm, about 2-3 mm; about 3-5 mm, about 5-10 mm or about 10-15 mm.

By providing an expanded substrate layer, the adhesive sealing sheet may better compensate for variations in the surface of the wall portion. A porous substrate may also better compensate for shrinkage of the liner.

The wall portion may comprise a polymeric material, in particular a thermoplastic polymeric material.

The wall portion may be formed of thermoplastic polymeric material such as polyolefin (e.g. polyethylene (HD or LD), polypropylene, high density polypropylene), polyvinyl chloride ("PVC" or "CPVC"), acrylonitrile butadiene styrene ("ABS"), polyethylene terephthalate ("PET"), polystyrene ("PS"), polyvinylidene fluoride ("PVDF") or polycarbonate ("PC"). The polymeric material (whether thermoplastic or not) may comprise property modifying additives and/or reinforcement materials, such as fibers. However, the wall portion may also be formed of concrete, metal, such as steel, stainless steel or iron, such as cast iron, or glass.

The adhesive sealing sheet may be applied locally to seal a damaged portion of the wall portion.

By "locally" is meant that the adhesive sealing sheet is applied to an area that is smaller than a total area of the drain system. For example, the adhesive sealing sheet may be applied to a short section of a drain pipe, as seen along a length of the drain pipe.

A "damaged portion" can be a portion having a crack, a hole or any other type of damage that may motivate a repair. Alternatively, the "damaged portion" may be a portion having a joint or a branch connection that is no longer needed, such that it is desired to cover it.

The damaged portion may be a portion of a pipe, which is spaced from a pipe end, in particular where an outside of the damaged portion is not accessible, e.g. due to the pipe being buried or concealed in a wall or floor.

The sealing sheet may be applied to cover the damaged portion, or the sealing sheet may be applied to provide a seal between the wall portion and the liner around the damaged portion, such as upstream and downstream of a damaged portion.

The wall portion may form part of a liquid-conducting pipe, in particular a drain pipe.

Hence, the method can be used to repair a pipe locally or an entire pipe.

The wall portion may be a liquid-conducting pipe having a first end opening and a second end opening, and wherein the adhesive sealing sheet is applied from the first end opening to the second end opening.

Hence, the adhesive sealing sheet may be applied along the entire drain pipe, on an inside or an outside thereof.

The adhesive sealing sheet may present a joint that extends longitudinally along the liquid-conducting system, wherein the joint is preferably positioned at an uppermost portion of the liquid-conducting system.

The wall portion may be an end portion of a liquid-conducting pipe, presenting an opening, wherein the adhesive sealing sheet is applied to the wall portion so as to entirely encircle the opening.

In particular, the adhesive sealing sheet may be applied locally, as seen along the pipe, in particular over a pipe length that is about 1-30 cm, preferably about 1-15 cm or about 1-10 cm. Hence, the method can be used to ensure that proper sealing is achieved between a liner covering the entire drain pipe and the drain pipe wall already at the drain pipe ends, in particular by ensuring that the adhesive sealing sheet extends longitudinally along the drain pipe all the way to the drain pipe opening edge, and preferably also that the liner seals against the adhesive sealing sheet all the way to the drain pipe opening edge.

The wall portion may form part of a floor drain housing.

A floor drain typically comprises a housing, which may have a wall portion and a bottom portion. Inside the housing, there may be provided one or more of a trap seal, a strainer basket, a sediment bucket and a grate or cover.

The liner may be preformed to a three-dimensional shape conforming to at least part of an interior shape of a housing of the floor drain.

Hence, as one example, where the liner comprises a reinforcement web and a setting resin, the reinforcement web may be preformed, e.g. by joining together at least two web portions which may conform to e.g. wall portions, a bottom portion, a drain pipe connector portion, etc. The joining may be achieved by stitching, glue, adhesive and/or welding.

As another example, where the liner is a thermoplastic material, this may be preformed into a desired shape, to be heated in connection with its installation.

By the method, least 90 % of a surface of an inside of the floor drain housing may be covered with the adhesive sealing sheet.

In some embodiments, the method may comprise providing the liner in a moldable state, wherein the method further comprises causing the liner to harden when conforming to the wall portion shape.

Hence, in such embodiments, the liner may be formed of a setting resin or from a thermoformable body, either of which may be reinforced.

The liner may comprise a reinforcement web and a polymer resin, in particular a setting polymer resin. However, in some applications, the use of a reinforcement may not be necessary.

The setting resin may, as non-limiting examples, be one or more of an epoxy resin, a polyester resin, a vinyl ester resin, a silicate resin and a polyurethane resin.

The reinforcement web may, as non-limiting examples, be a fiberglass reinforcement, a carbon fiber reinforcement, a polyester fiber reinforcement, a nylon fiber reinforcement or a propylene fiber reinforcement.

The reinforcement web may, as non-limiting examples, be formed as a 2D or 3D nonwoven web or as a woven or knitted 2D or 3D web.

In other embodiments, the liner may be resilient, wherein said providing the liner comprises providing the liner in a radially collapsed state, and wherein causing the liner to conform to a wall portion shape comprises causing the liner to resume an essentially non-collapsed state.

In the non-collapsed state, there may still remain some deformation, such that a bias may be provided towards the wall portion.

In such embodiments, the liner may be formed of a body of rubber or a resilient metal, which may be collapsed during introduction into the liquid-conducting system and then allowed to expand so as to clamp the adhesive sealing sheet between the liner and the wall portion.

The method may further comprise arranging a moisture sensor on a side of the adhesive sealing sheet that is intended to be dry.

According to a second aspect, there is provided a liquid-conducting system, comprising a liquid-conducting system wall portion, a liner having a shape conforming to a wall portion shape of the liquid-conducting system wall portion, and an adhesive sealing sheet applied to at least a portion of the liquid-conducting system wall portion, between the liquid-conducting system wall portion and the liner, with a first adhesive surface of the adhesive sheet facing and adhering to the liquid-conducting system wall portion.

The liquid-conducting system may be any liquid conducting system or part thereof as disclosed herein.

The adhesive sealing sheet may be any adhesive sealing sheet described herein.

The liner may be any type of liner as described herein, in particular a liner comprising a reinforcement web and a setting polymer resin, or a thermoformable liner.

### Drawings

Figs 1a-1d schematically illustrate adhesive sealing sheets.
Figs 2a-2c schematically illustrate a method of renovating a drain pipe.
Figs 3a-3c schematically illustrate a method of renovating a floor drain.

### Detailed description

While the present disclosure is applicable to any type of liquid-conducting system, including non-pressurized systems, such as drain systems for conducting waste water or storm water, and including pressurized systems, such as fresh water systems or irrigation water systems, the solutions will be exemplified with reference to drain systems and their repair from an inside. It is understood that the solutions can be analogously applied to any type of liquid-conducting system repaired from the inside or from the outside.

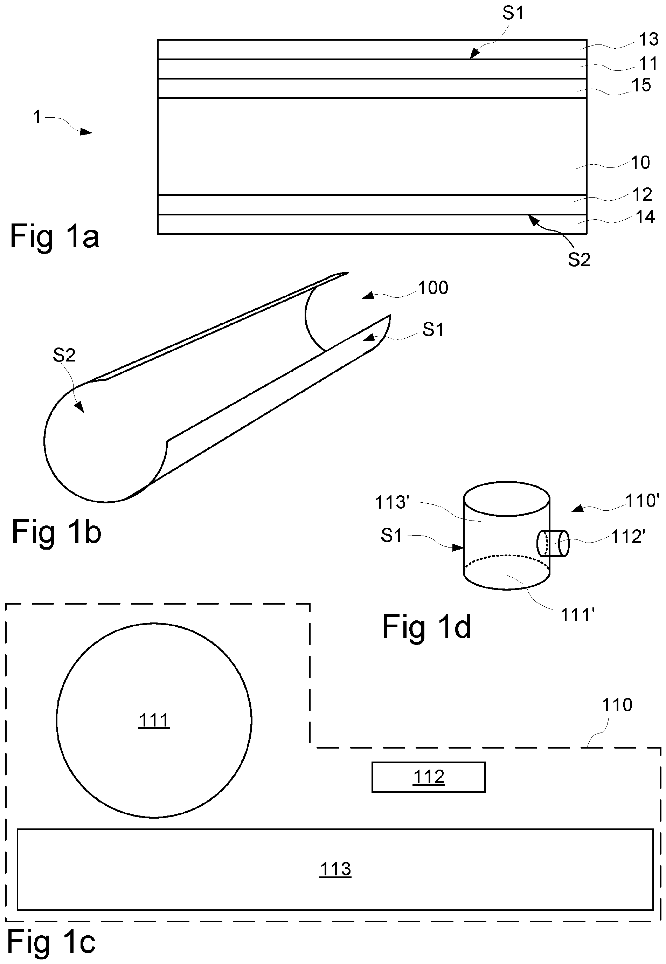

Figs 1a-1d schematically illustrate adhesive sealing sheets 1, 100, 111, 112, 113 for use in the present inventive concepts.

Fig. 1a schematically illustrates a cross sectional view of an adhesive sealing sheet 1, 100, 111, 112, 113, which comprises a substrate layer 10 and at least one adhesive layer 11, 12 bonded to the substrate layer 10. Optionally, one or both of the adhesive layers 11, 12 may be provided with a removable release liner 13, 14. Further, optionally, there may be provided an additional sealing layer 15.

The substrate layer 10 of the adhesive sealing sheet 1, 100, 111, 112, 113 of the present disclosure may be expanded, such as foamed.

A foamed substrate layer 10 may be fabricated from a flexible material exhibiting a cellular structure, such as polyolefin foam, polyurethane foam, polystyrene foam, or ethylene-vinyl acetate (EVA) foam. The cellular structure of the substrate provides cushioning and flexibility and also allows for some variations in the surface.

The substrate layer 10 may have various thicknesses depending on the intended application. In particular, the substrate layer may have a thickness of about 0.05-15 mm, in particular about 0.05-0.1 mm, about 0.1-0.3 mm, about 0.3-0.5 mm, about 0.5-1 mm, about 1-1.5 mm, about 1.5-2 mm, about 2-3 mm; about 3-5 mm, about 5-10 mm or about 10-15 mm.

In particular, a non-expanded substrate layer may have thicknesses of about 0.1-0.5 mm, while expanded substrate layers may have thicknesses of about 0.5-15 mm.

At least one adhesive layer 11, 12 may be applied onto one or both sides of the substrate layer 10. The adhesive layers 11, 12 may comprise a pressure-sensitive adhesive (PSA) capable of adhering to various surfaces upon application of pressure. Suitable PSAs include acrylic-based adhesives, rubber-based adhesives, and silicone-based adhesives, among others.

In one embodiment, the adhesive layer 11, 12 is applied onto one side of the substrate layer 10, leaving the other side free of adhesive. Such other side may instead be porous, so as to allow any resin material to penetrate and adhere. Alternatively, adhesive layers 11, 12 may be applied onto both sides of the substrate layer 10, providing adhesion on both surfaces.

The adhesive sealing sheet 1, 100, 111, 112, 113 may further comprise a release liner 13, 14 or backing layer covering one or both of the adhesive surface(s) to protect them prior to use. The release liner may be easily removed to expose the adhesive surface(s) when desired. A release liner 13, 14 may be paper based. Where the adhesive sealing sheet is provided on a roll, a single release liner may effectively protect both adhesive layers 11, 12.

A sealing layer 15 may be provided in the event the substrate layer 10 is not sufficient to provide the necessary moisture barrier. The sealing layer 15 may be formed of a film of polyolefin, such as PE, PP, of polyvinyl chloride, ethylene propylene diene monomer rubber, polyurethane, acrylic or silicone. The sealing layer 15, if any, may be about 0.1-1.5 mm, such as about 0.1-0.5 mm, about 0.5-1.0 mm or about 1.0-1.5 mm.

The adhesive sealing sheet 1, 100, 111, 112, 113 will present at least one exposed surface S1, S2, that may be adhesive when the associated adhesive layer(s) 11, 12 is/are exposed, such as by removal of the release liner, if any.

Hence, the adhesive sealing sheet 1, 100, 111, 112, 113 may be a one-sided adhesive sealing sheet, having one exposed surface S1, S2 that is adhesive, while the opposing surface may be non-adhesive. The opposing surface may instead be adapted for adhesion to another bonding system, such as a glue, a fix or a resin-based system.

Alternatively, the adhesive sealing sheet 1, 100, 111, 112, 113 may be a double-sided adhesive sealing sheet, having two opposite exposed surfaces S1, S2 that are adhesive.

The two adhesive layers 11, 12 may be formed of the same or different types of adhesives, such that the corresponding exposed surfaces S1, S2 may have different adhesive properties.

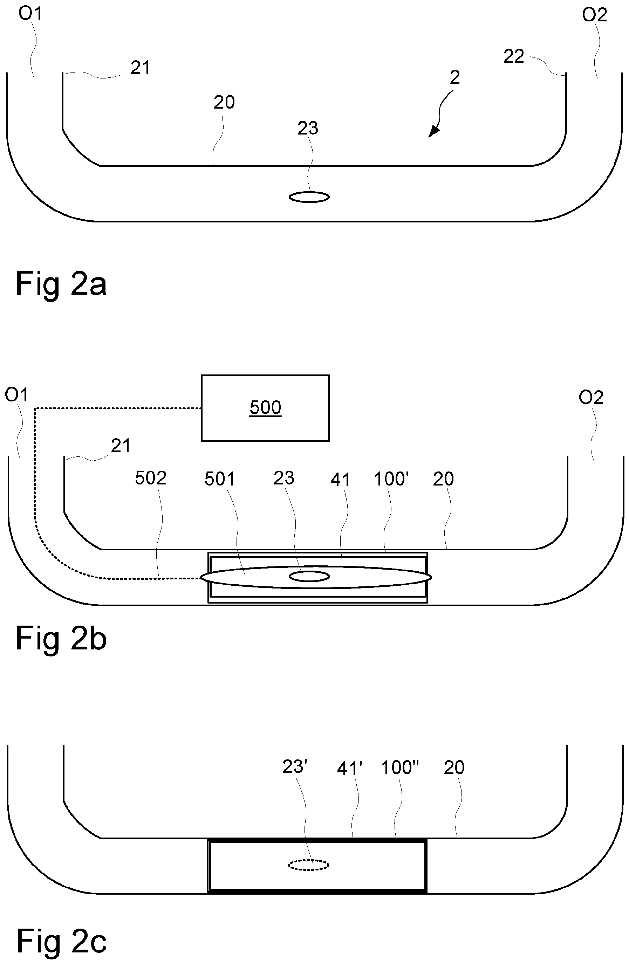

Fig. 1b schematically illustrates an adhesive sheet 100, which may have the constitution as disclosed with reference to fig. 1a, rolled into a tubular shape suitable for introduction into a drain pipe, as will be described with reference to figs. 2a-2c.

As illustrated in fig. 1b, a surface S1 that is exposed radially outwardly should have adhesive properties, thus being formed by an adhesive layer 11.

The radially inwardly exposed surface S2 may have adhesive properties. Alternatively, the inwardly exposed surface may be adapted to bond to a resin system used for repairing and/or relining a drain pipe, as mentioned above.

Fig. 1c schematically illustrates a kit of adhesive sealing sheet parts 110 for covering an inside of a floor drain housing.

The kit 110 may comprise parts adapted in terms of shape and size to fit various wall portions of specific floor drain housings. In the illustrated embodiment, the kit comprises a bottom sheet 111, a drain pipe connector sheet 112 and a wall sheet 113. The sheets 111, 112, 113 may be sized to provide some overlap to ensure proper sealing between the sheets. Alternatively, or as a supplement, the sheets 111, 112, 113 may comprise tabs or the like to enhance interconnection and sealing between the sheets 111, 112, 113. The sheets may also have pre-printed markings, or re-cut holes, for drain pipe connectors, or the like.

Fig. 1d schematically illustrate the kit 110' in an "assembled" state with an exposed surface S1 that is exposed outwardly toward an inner wall of a corresponding floor drain housing, with the bottom sheet 111' mounted or mountable to a bottom of the floor drain housing, the wall sheet 113' rolled into a shape corresponding to a wall of the floor drain housing and with the drain pipe connector sheet 112' rolled into a shape corresponding to an inside of the drain pipe connector.

It is understood that an adhesive sealing sheet 1, 111, 112, 113 may be provided to all of the floor drain housing, or to a portion of the floor drain housing where there is damage, such as a hole or a crack, and that the adhesive sealing sheet 1, 111, 112, 113 may be adapted in terms of size and shape to duly cover a thus damaged area.

The adhesive sealing sheet is used together with a liner system. Such liner systems are known per se. A commonly used liner system is described in the background section and comprises a reinforcement web that is impregnated with a setting polymer resin, brought to the site to be repaired (or caused to line an entire pipe) and pressed against the wall of the drain pipe while setting, so as to provide an "inner pipe" with a shape and size that closely conforms to the shape of the original drain pipe.

Alternatively, it is possible to use a thermoformable system, wherein the liner is heated and formed while being pressed against the wall of the drain pipe while cooling, so as to provide the "inner pipe".

A drain system may comprise a system wall, which may take the form of a pipe wall, a floor drain wall, a water trap wall, or the like.

A drain pipe 2 will typically have a pair of openings O1, O2 at respective ends of the drain pipe. As non-limiting examples, an opening O1, O2 may provide a connection to a device, such as a sink, a bath tub, a toilet, a bidé, a floor drain, or the like. As further non-limiting examples, an opening O1, O2 may connect to another pipe, a vent pipe, a sewer line, a cleanout fitting, a branch line, a storm drain or a pump housing.

Figs 2a-2c schematically illustrate a process of repairing a hole 23 in a pipe 20 forming part of a drain system 2. The illustrated pipe 20 has two ends 21, 22, each of which providing a respective opening O1, O2. However, the methods disclosed herein can be used also on pipes having junctions, traps, inspection hatches, or the like. While it may be an advantage to be able to access the pipe 20 from two or more openings, it may be sufficient to access the pipe through a single opening. Moreover, the method can be used analogously for relining an entire drain pipe end to end, or for repairing a local section of a drain pipe, which is being illustrated in the following.

Initially, a position of the hole 23 is identified. There are various ways of identifying the position of a hole.

A method comprising a visual inspection system equipped with one or more cameras or optical sensors positioned along the length of the pipe, or introduced into the pipe. The system captures images or video footage of the pipe's surface and presents them for inspection and/or analyzes them using image processing algorithms to detect the presence and position of any holes or anomalies.

A method utilizing ultrasonic sensors or transducers attached to the surface of the pipe. These sensors emit ultrasonic waves into the pipe, and the reflections or changes in wave patterns caused by the presence of a hole are analyzed to determine the location of the hole along the pipe's length.

A method based on monitoring pressure differentials along the length of the pipe. By measuring variations in pressure caused by the presence of a hole, the location of the hole can be inferred using pressure sensors or transducers strategically placed along the pipe.

A method utilizing microphones or acoustic sensors positioned at intervals along the pipe. These sensors capture the acoustic signature of the flowing fluid within the pipe, and deviations indicative of a leak or hole are analyzed to determine the location of the anomaly.

A method employing infrared cameras or thermal sensors to detect temperature anomalies along the surface of the pipe. The presence of a hole may cause localized temperature variations that can be detected and used to pinpoint the location of the hole.

A method involving the injection of a tracer substance into the fluid flowing through the pipe. Sensors positioned downstream of the injection point detect the presence of the tracer, and the time it takes for the tracer to reach each sensor is analyzed to infer the location of the hole.

For many applications, it is sufficient to identify the position of the hole 23 with reference to an end 21, 22 of the pipe.

Depending on the state of the pipe, it may be necessary to clean relevant portions of the pipe, such as the portion near the hole 23, as well as the portion between the hole 23 and the opening O1, O2 that is to be used for access.

Referring to fig. 2b, an adhesive sealing sheet 100' is prepared having a sufficient length along the longitudinal direction of the drain pipe 20 and a sufficient width to cover the hole 23 and optionally also to conform to the inner circumference of the drain pipe 20 is prepared and arranged with an outwardly exposed surface formed by an adhesive layer 11, 12.

A liner 41, as described above, is also prepared having appropriate length and circumference. The liner 41 is positioned radially inside the adhesive sealing sheet 100'.

Alternatively, the adhesive sealing sheet 100' may be arranged only at end portions of the liner 41, and in such case preferably to completely encircle the sealing sheet 100'. In such case, the seal will be provided at the end portions of the sealing sheet, at opposite sides of the hole 23 as seen in the longitudinal direction of the drain pipe 20, thus sealing the sealing sheet against the drain pipe 20.

A collapsed inflatable bladder 501 is arranged radially inside the liner 41. The bladder 501 is connected to a compressor 500 via a hose 502.

Optionally, a protective sheet (not shown) may be arranged between the liner 41 and the bladder 501, such that the bladder 501 will not be permanently contaminated by the liner and possibly also to facilitate release of the liner 41 from the bladder 501.

A lubricant may be provided to the outside of the adhesive sealing sheet 100' so as to reduce the risk of inadvertent adhesion to the inside of the pipe. For example, water may be used as such lubricant. Other options include talcum powder, corn starch, or the like. The adhesive may also be temporarily deactivated by cooling, heating or use of a small amount of an adhesive remover or other similar solvent.

The collapsed inflatable bladder 501, the liner 41 and the rolled up adhesive sealing sheet 100' may be tied (e.g. using strings that break upon pressurization of the bladder 501) together to provide a diameter smaller than an inside diameter of the drain pipe 20, after which they are brought to the position of the hole 23, e.g. by manipulation of the hose 502 inserted into the first opening O1 and/or by using a draw string (not shown) from the second opening O2.

Referring to figs 2b and 2c, once at the correct position, the compressor 500 is used to inflate the bladder 501, whereby the liner 41' is allowed to set or cool so as to form an "inner pipe" in the drain pipe 20, with the adhesive sealing sheet 100" between the inside of the drain pipe 20 and the outside of the liner 41', such that the hole 23' is closed and a seal is achieved between the liner and the wall of the drain pipe 20.

It is possible to add heat to speed up a curing process, e.g. by introducing steam or hot air into the bladder 501. However, depending on the resin system used, the setting process may generate sufficient heat.

The heat added or generated may enhance the adhesion of the adhesive sealing sheet 100' to the drain pipe wall by providing a stronger adhesion. Moreover, where the adhesive sealing sheet 100' is thermoformable, its conformance with the shape of the pipe wall may be enhanced.

The bladder 501 may be left in site in its inflated state for a sufficient time until the liner 41' has set or cooled, as the case may be, after which the bladder 501 may be deflated and extracted from the drain pipe 20.

After the liner 41' has set or cooled, it may be desirable to do a further inspection and optionally further grinding and/or polishing to achieve a desirable surface.

It is possible to use the same method for renovating a limited portion of the pipe 2 as illustrated in figs 2a-2c, as for renovating the entire pipe 2 from end to end.

Moreover, it is possible to use the adhesive sealing sheet 100, 100', 100" only at one, or both ends 21, 22 of the pipe 2 in connection with an end to end relining of the pipe 2, to provide an improved seal between the pipe end 21, 22 and the liner 41'. To this end, a short section of adhesive sealing sheet, having a length of about 1-30 cm along the pipe may be provided. Preferably such short section of adhesive sealing sheet should extend all the way around the opening, possibly with some overlap.

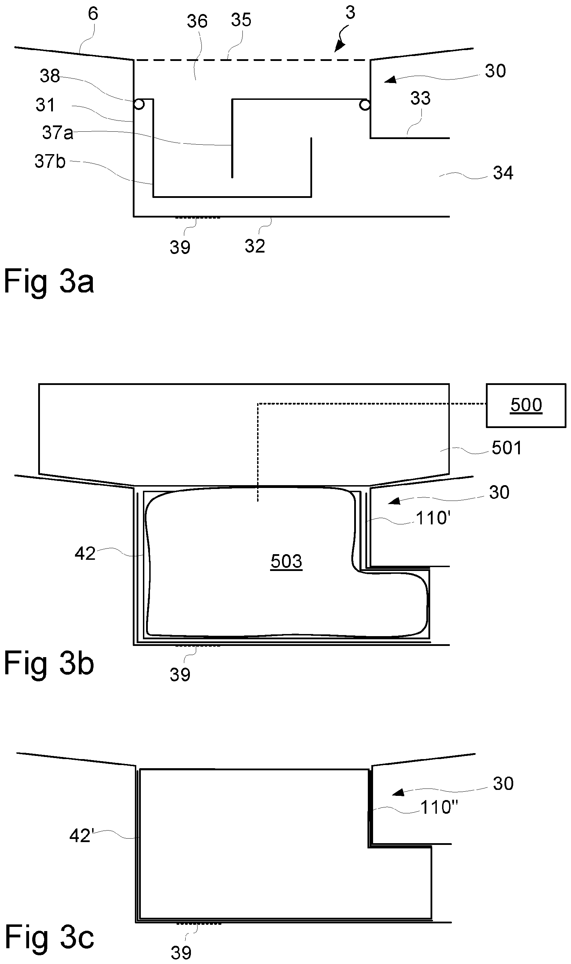

Referring to fig. 3a, a floor drain 3 will typically comprise a housing 30, which may have walls 31, a bottom 32, a drain connector 33 providing an outlet 34, a grate 35 covering an inlet 36 and a water trap arrangement 37a, 37b, which may connect to the housing 30 by a seal 38.

Referring to figs 1c, 1d, 3a-3c, there will now be described a method of renovating a floor drain 3.

A floor drain 3 is typically fixedly connected to a floor 6, such that it is difficult to remove for replacement. Oftentimes, the floor drain housing 30 may be more or less encased in concrete and/or levelling compound, such that it cannot be replaced without destroying the floor 6, and possibly also the joist or slab around the floor drain 3.

A damaged section 39, such as a second around a hole, a crack or a dent, of the floor drain housing 30 is identified. Depending on the state of the floor drain housing 30, the floor drain housing 30 may need to be cleaned.

An inside of the floor drain housing 30 around and covering a damaged section 39 is covered by the adhesive sealing sheet 110, 110'. In some embodiments, the entire inside of the floor drain housing 30, optionally including some or all of the outlet connector 33, may be covered, e.g. by forming the adhesive sealing sheet as disclosed with reference to figs 1c and 1d. In other embodiments, only a portion of the floor drain housing 30, around the damaged section 39, is covered by the adhesive sealing sheet 110, 110', which is caused to adhere to a wall of the floor drain housing 30 by means of an adhesive layer 11, 12.

It may be desirable to ensure a perfect seal, e.g. by allowing sections of the adhesive sealing sheet 110, 110' to overlap, and/or to apply a separate sealing strip, which may overlap a pair of adjacent sealing sheet edges.

A liner 42 is prepared. In some embodiments, the liner is formed, e.g. by joining together liner pieces corresponding to the sealing sheet pieces 111, 112, 113 illustrated in fig. 1c, to form a liner body corresponding to the sealing sheet body 110' illustrated in fig. 1b, such that the entire inside of the floor drain housing 30, optionally including some or all of the outlet connector 33 is to be covered by the liner. In other embodiments, the liner is formed so as to only partially cover the inside of the drain housing 30, but preferably to cover the entire adhesive sealing sheet 110, 110'.

Where the liner comprises a reinforcement web and a setting resin, the reinforcement web may be preformed, e.g. by joining together at least two web portions which may conform to e.g. wall portions, a bottom portion, a drain pipe connector portion, etc. The joining may be achieved by stitching, glue, adhesive and/or welding.

As another example, where the liner is a thermoplastic material, this may be preformed into a desired shape, to be heated in connection with its installation.

The liner 42 is soaked with resin, as described in the background section and then inserted into the floor drain housing 30.

An inflatable bladder 503 may be inserted into the liner 42, optionally with a protective sheet between the bladder 503 and the liner 42. The bladder 503 may be caused to extend into the outlet connector 33.

Optionally, a counterhold 501 may be positioned on top of the bladder 503 so as to prevent the bladder from leaving the floor drain housing 30 when inflated.

Alternatively, where suitable, instead of a bladder, some other type of mechanically, hydraulically or pneumatically expandable device may be used to press the liner 42 against the inside of the floor drain housing 30.

As with the process illustrated in figs 2a-2c, heat may be added while the liner 42 is pressed against the floor drain housing 30 during the process of it setting (or cooling, as the case may be) so as to conform to the shape of the floor drain housing 30.

Once the liner 42 has set or cooled, it may be inspected, and optionally processed by grinding and/or polishing.

When renovating a structure that is more easily accessible, such as a floor drain housing, it may not be necessary to provide any reinforcement web. Instead, the adhesive sealing sheet may be applied as desired, while a non-reinforced liner may be applied. Such a non-reinforced liner can be formed by applying a setting resin to the surface of the drain housing, optionally with the use of a temporary mold for achieving a desirable surface and shape of the thus formed housing liner. In the alternative, the liner may be provided with chopped reinforcement fibers, rather than a preformed reinforcement web.

The methodologies described above may also be used on an outside of the liquid-conducting system, in which case the adhesive sealing sheet 100, 100', 100" would be arranged to cover the damaged portion on the outside of the liquid-conducting system with its adhesive surface S1 engaging an outside of a wall of the liquid-conducting system. The liner would in this case be arranged radially outside the adhesive sealing sheet 100, 100', 100", and preferably wrapped around same, such that it will be able to take up any load exerted by the liquid from inside the liquid-conducting system.

Also when applying a liner to the outside of a wall, it may be desirable to bias the liner against the wall, e.g. by a pneumatic or hydraulic compression system such as a compression hose or bladder which is wound or otherwise arranged around e.g. a pipe, or by a mechanically activated compression system, such as a clamping (ratchet) strap or an elastic strap or sheet.

Another option is to provide the liner in the form of a resilient sleeve, which can be temporarily radially collapsed, such that it can be introduced into e.g. a pipe, and brought to a damaged portion of the pipe, after which the sleeve is allowed to resume its original position. Such as sleeve may be formed from a rubber material, from a sufficiently resilient metallic material, or from a metal-reinforced rubber or other polymer material. The sleeve may be retained in its radially collapsed state in the same manner as the liner 41, 42 described above. A bladder 501 may be used to bring the sleeve into its intended position and to bring its from its collapsed state. Alternatively, the sleeve may be held in its radially collapsed state by a tape or string, which can be cut or otherwise undone remotely. In the non-collapsed state, there may still remain some deformation, such that a bias may be provided towards the wall portion.

The sleeve may have structures, such as ridges, lips, or the like, which extend around the periphery of the sleeve and face the wall portion against which a seal is to be established. Hence, such structures may be provided on a radially outwardly facing surface of the sleeve for sleeves that are to be positioned inside a pipe, or on an inwardly facing surface of the sleeve for sleeves that are to be positioned on an outside of the pipe. Sleeves that are to be positioned on the inside may be outwardly biased against the pipe, while sleeves that are to be positioned on the outside of the pipe may be inwardly biased.

In the case of a floor drain, the liner may be provided as a resilient product, which conforms resiliently outwardly towards the inner surface of the floor drain housing.

The adhesive sealing sheet may also be used in connection with a branch liner and correspondingly branched bladder, for use in relining drain pipes. Branch liners are known as such and take the form of a liner having a one-piece construction with a branch pipe. In such case, the adhesive sealing sheet may be provided between the drain pipe and the liner at each individual branch pipe and encircling each branch pipe, such that a seal is provided for each branch pipe of the branch liner.

The adhesive sealing sheet may also be used in connection with sprayed relining, wherein the adhesive sealing sheet is first applied to the pipe walls and subsequently, the liner is applied by spraying, or the like.

## Claims

1. A method of renovating a liquid-conducting system (2, 3), comprising:
providing a liner (41, 42),
applying the liner (41, 42) to at least a wall portion (20, 31, 32, 33) of the liquid-conducting system, and
causing the liner (41, 42) to conform to a wall portion shape,
**characterized by**
applying an adhesive sealing sheet (100, 100', 100", 110, 110', 110") to at least a portion of the wall portion (20, 31, 32, 33) of the liquid-conducting system, such that a first adhesive surface (S1) of the adhesive sealing sheet (100, 100', 100", 110, 110', 110") causes the adhesive sealing sheet to adhere to the wall portion (20, 31, 32, 33),
whereby the adhesive sealing sheet (100, 100', 100", 110, 110', 110") is arranged between the wall portion (20, 31, 32, 33) and the liner (41, 42).

2. The method as claimed in claim 1, wherein the adhesive sealing sheet (100, 100', 100", 110, 110', 110") is a double-sided adhesive sealing sheet comprising a second adhesive surface (S2) on a second surface opposite the first adhesive surface (S1), said second adhesive surface (S2) causing the adhesive sealing sheet (100, 100', 100", 110, 110', 110") to adhere to the liner (41, 42).

3. The method as claimed in claim 1 or 2, wherein the adhesive sealing sheet (100, 100', 100", 110, 110', 110") comprises a substrate layer (10), which is expanded, in particular foamed, and preferably has a thickness of about 0.5-15 mm, preferably about 0.5-1 mm, about 1-1.5 mm, about 1.5-2 mm, about 2-3 mm; about 3-5 mm, about 5-10 mm or about 10-15 mm.

4. The method as claimed in any one of the preceding claims, wherein the adhesive sealing sheet (100, 100', 100", 110, 110', 110") is applied locally to cover a damaged portion of the wall portion (20, 31, 32, 33).

5. The method as claimed in any one of the preceding claims, wherein the wall portion forms part of a liquid-conducting pipe (20).

6. The method as claimed in any one of claims 1-4, wherein the wall portion is a liquid-conducting pipe (20) having a first end opening (O1) and a second end opening (O2), and wherein the adhesive sealing sheet (100, 100', 100", 110, 110', 110") is applied from the first end opening (O1) to the second end opening (O2).

7. The method as claimed in claim 5 or 6, wherein the adhesive sealing sheet (100, 100', 100", 110, 110', 110") presents a joint that extends longitudinally along the drain system, wherein the joint is preferably positioned at an uppermost portion of the liquid-conducting system (2, 3).

8. The method as claimed in any one of the preceding claims, wherein the wall portion is an end portion (21, 22) of a liquid-conducting pipe (20), presenting an opening (O1, O2), wherein the adhesive sealing sheet (100, 100', 100", 110, 110', 110") is applied to the wall portion (20) so as to entirely encircle the opening (O1, O2).

9. The method as claimed in any one of claims 1-4, wherein the wall portion (31, 32, 33) forms part of a floor drain housing (30).

10. The method as claimed in claim 9, wherein the liner (41, 42) is preformed to a three-dimensional shape conforming to at least part of an interior shape of a housing (30) of the floor drain (3).

11. The method as claimed in claim 9 or 10, wherein at least 90 % of a surface of an inside of the floor drain housing (30) is covered with the adhesive sealing sheet (100, 100', 100", 110, 110', 110").

12. The method as claimed in any one of the preceding claims, wherein said providing the liner comprises providing the liner in a moldable state, and wherein the method further comprises causing the liner (41, 42) to harden while conforming to the wall portion shape.

13. The method as claimed in any one of claims 1-11, wherein the liner is radially resilient, wherein said providing the liner comprises providing the liner in a radially collapsed state, and wherein causing the liner (41, 42) to conform to a wall portion shape comprises causing the liner to resume an essentially non-collapsed state.

14. The method as claimed in any one of the preceding claims, further comprising arranging a moisture sensor on a side of the adhesive sealing sheet that is intended to be dry.

15. A liquid-conducting system, comprising:
a liquid-conducting system wall portion (20, 31, 32, 33),
a liner (41, 42) having a shape conforming to a wall portion shape of the liquid-conducting system wall portion (20, 31, 32, 33), and
an adhesive sealing sheet (100, 100', 100", 110, 110', 110") applied to at least a portion of the liquid-conducting system wall portion (20, 31, 32, 33), between the liquid-conducting system wall portion (20, 31, 32, 33) and the liner, with a first adhesive surface (S1, S2) of the adhesive sheet (100, 100', 100", 110, 110', 110") facing and adhering to the liquid-conducting system wall portion (20, 31, 32, 33).
